# EUROPÄISCHE PATENTSCHRIFT

(11) **EP 1 566 977 B1**
(45) Veröffentlichungstag und Bekanntmachung des Hinweises auf die Patenterteilung: **13.09.2017**
(21) Anmeldenummer: 05010363.9
(22) Anmeldetag: 17.01.2001
(51) Int. Cl.: H04M 3/42, H04M 3/53, H04M 1/247, H04W 88/18, H04W 92/02

(54) **Verfahren und Telekommunikationssystem zur Übermittlung einer Nachricht**
Method and telecommunication system for transmitting a message
Procédé et système de télécommunication pour la transmission d'un message

(30) Priorität: 02.02.2000 EP 00102074
(43) Veröffentlichungstag der Anmeldung: 24.08.2005
(62) Teilanmeldung aus: 01902331.6
(73) Patentinhaber: Siemens Aktiengesellschaft, 80333 München (DE)
(72) Erfinder: Becker, Thomas, 59755 Arnsberg (DE); Bruchertseifer, Jörg, 86156 Augsburg (DE); Heling, Guido, 44263 Dortmund (DE); Lucassen, Helmut, 48703 Stadtlohn (DE); Watzke, Jörn, 85368 Moosburg (DE); van de Logt, Marco, 47574 Goch (DE)

(56) Entgegenhaltungen:
- WO-A-99/49644
- GB-A- 2 298 339
- US-A- 5 815 506
- "Public Switched Telephone Network (PSTN); Subscriber line protocol over the local loop for display (and related) services; Part 1: On hook data transmission; ETS 300 659-1", IEEE, LIS, SOPHIA ANTIPOLIS CEDEX, FRANCE, vol. SP-3, 1 February 1997 (1997-02-01), XP014017899, ISSN: 0000-0001
- "Public Switched Telephone Network (PSTN); Subscriber line protocol over the local loop for display (and related) services; Part 2: Off-hook data transmission; ETS 300 659-2", IEEE, LIS, SOPHIA ANTIPOLIS CEDEX, FRANCE, vol. SP-3, 1 September 1997 (1997-09-01), XP014014133, ISSN: 0000-0001

## Beschreibung

Die Erfindung betrifft ein Verfahren zur Übermittlung einer Nachricht von einem ersten Telekommunikations-Endgerät zu einem zweiten Telekommunikations-Endgerät gemäß dem Oberbegriff des Patentanspruches 1 und ein Telekommunikationssystem zur Übermittlung einer Nachricht von einem ersten Telekommunikations-Endgerät zu einem zweiten Telekommunikations-Endgerät gemäß dem Oberbegriff des Patentanspruches 2.

In nach dem GSM-Standard arbeitenden Mobilfunknetzen hat sich neben der - natürlich bei weitem dominierenden - Sprachkommunikation, insbesondere mit Blick auf erhebliche Kostenvorteile, die Kommunikation mittels kurzer Kurznachrichten (Short Messages) auf der Grundlage des hierfür geschaffenen Standards erfolgreich etabliert. Neben den Kostenvorteilen hat die Nachrichtenübertragung per SMS (Short Message Service) in bestimmten Anwendungsfällen auch Gebrauchswertvorteile. So sind Empfang und Absendung einer SMS ohne akustische Belästigung für die Umgebung realisierbar, und die Übermittlung von Kurznachrichten bietet gegenüber der Sprachkommunikation auch zusätzliche Ausdrucks- und psychologische Akzentuierungsmöglichkeiten.

Bei SMS handelt es sich um einen Punkt-Zu-Punkt-Kurznachrichtendienst, der im Rahmen der GSM-Protokollarchitektur auf der Signalisierungsebene realisiert wird. Er umfasst den Transport paketorientierter Nutzdaten von und zu Mobilstationen. Die Kurznachrichten werden stets über ein Short-Message-Dienstzentrum (SM SC = Short Message Service Center) im Store-and-Forward-Betrieb transportiert. Das Dienstzentrum nimmt die maximal 160 Zeichen langen Kurznachrichten von einer Mobilstation als Telekommunikations-Endgerät entgegen und leitet sie an ein zweites Telekommunikations-Endgerät - eine weitere Mobilstation oder auch ein Faxgerät o. ä. - weiter.

Zur Realisierung dieses Dienstes definiert der GSM-Standard eine spezielle Protokollarchitektur. Diese ist in den ETSI-Spezifikationen festgelegt und wird in der Literatur hinreichend beschrieben (vgl. etwa J. Eberspächer, H. J. Vögel: "GSM Global System for mobile communication", Stuttgart, 1997), so dass eine genauere Beschreibung hier entbehrlich ist und auf das anhängende Normen-/Dokumentenverzeichnis verwiesen werden kann.

In den bestehenden öffentlichen leitungsgebundenen Telefonnetzen ist eine derartige Übertragung von Kurznachrichten zwischen normalen Telekommunikations-Endgeräten (z. B. Telefonen) derzeit nicht möglich.

Aus der GB 2 298 339 A ist ein Verfahren zum Übertragen von Kurznachrichten zwischen einem Kurznachrichten-Dienstzentrum und einem DECT-Schnurlostelefon, bestehend aus einer Feststation und einem Mobilteil, bekannt, bei dem die Kurznachricht von dem Dienstzentrum zu der Feststation über eine separate, Dienstzentrumsbetreiber-spezifische Verbindung, die z.B. als ein X.25-Netzwerk realisiert ist, gemäß einem SMS-spezifischen Protokoll übertragen wird.

Aus der US 5,815,506 ist ein Satellitenkommunikationssystem bekannt, über das eine Kurznachricht, die von einem Festnetzteilnehmer generiert worden sind, gemäß einem SMS-spezifischen Protokoll an einen Mobilfunkteilnehmer übertragen werden. Die Kurznachricht wird dazu zunächst von dem Festnetzteilnehmer über ein PSTN-Netz an einen Kurznachrichtenserver übertragen. Von dort gelangt die Kurznachricht über eine lokale Satellitenbodenstation, einen Satelliten und einer Mobilfunkstation zum Mobilfunkteilnehmer. Für die Kurznachrichtenübertragung zwischen dem Festnetzteilnehmer und dem Mobilfunkteilnehmer wird eine Signalisierung außerhalb des Sprach- bzw. Nutzdatenbandes, die so genannte Außenbandsignalisierung, benutzt. Bei dieser Art der Kurznachrichtenübertragung lassen sich Nachrichtenmengen bis zu maximal 16 Kbyte übertragen. In dem PSTN-Netz stehen für diese Art der Übertragung ein "DIAL UP"-Modem sowie eine DTMF-Tonerkennung zur Verfügung.

Der Erfindung liegt daher die Aufgabe zugrunde, ein Verfahren sowie ein Telekommunikationssystem anzugeben, die die Übermittlung von Kurznachrichten nach dem Vorbild des SMS in einem leitungsgebundenen Telefonnetz (Festnetz) ermöglichen.

Diese Aufgabe wird hinsichtlich ihres Verfahrensaspektes ausgehend von dem in dem Oberbegriff des Patentanspruches 1 definierten Verfahren durch die in dem Kennzeichen des Patentanspruches 1 angegebenen Merkmale und hinsichtlich ihres Anordnungsaspektes ausgehend von dem in dem Oberbegriff des Patentanspruches 2 definierten Telekommunikationssystem durch die in dem Kennzeichen des Patentanspruches 2 angegebenen Merkmale gelöst.

Die Erfindung schließt den grundlegenden Gedanken ein, ohne Rücksicht auf die tiefgreifenden Systemunterschiede zwischen Mobilfunknetzen einerseits und den bekannten leitungsgebundenen Netzen (Festnetzen) andererseits die bewährte SMS-Protokollarchitektur des GSM-Standards (bzw. auch eine vergleichbare Architektur des UMTS-Standards) auf das Festnetz gewissermaßen abzubilden und auszuweiten.

Mit den nachfolgend beschriebenen Spezifikationen definiert die Erfindung das Übertragungsprotokoll und die physikalischen und administrativen Voraussetzungen zur Übertragung von Kurznachrichten im Short-Message(SMS)-Format zwischen dem Endgerät und dem Short-Message-Dienstzentrum. Das Übertragungsprotokoll wird hierbei bevorzugt in enger Anlehnung an das beim GSM-Standard definierte Protokoll festgelegt. Hiermit wird das Ziel verfolgt, die Übermittlung von Kurznachrichten als für das Festnetz neuen Dienst mit geringem Aufwand und hoher Kompatibilität mit bestehenden Systemen anzubieten. Es wird ein einheitliches SMS-Format im GSM-Netz und im Festnetz verwendet, wodurch die reibungslose Übermittlung von Short Messages zwischen einem nach dem GSM-Standard aufgebauten und betriebenen Mobilfunknetz und dem erfindungsgemäß ausgerüsteten Festnetz gewährleistet wird. Zudem bietet der mit dieser Ausführung der Erfindung eingeschlagene Weg den erheblichen praktischen Vorteil, dass in der Spezifikation des SMS-Dienstes weitestgehend auf die anerkannten und mittlerweile erprobten und bewährten GSM-Spezifikationen zurückgegriffen werden kann.

In der physikalischen Schicht erfolgt die Datenübertragung zwischen Endgerät und Dienstzentrum mittels DTMF-Signalisierung und/oder über eine nach ETS 300 659-1 und ETS 300 659-2 spezifizierte FSK(Frequency Shift Keying - Frequenzumtastkodierung) Off-Hook-Signalisierung im Sprachband (Innenbandsignalisierung). Diese genannten Übertragungsverfahren können in beliebigen Kombinationen eingesetzt werden. Insbesondere kann das Endgerät eine Signalisierung mittels DTMF vornehmen und das Dienstzentrum kann die FSK-Modulation nutzen, wobei natürlich die jeweils empfangende Einheit für das angewandte Verfahren angepasst sein muss.

Oberhalb der physikalischen Schicht ist eine Datenverbindungs-Schicht (Data-Link-Layer) spezifiziert, die den logischen Verbindungsaufbau und das Aufsetzen auf den Standard GSM-SMS gewährleistet. Der letztere Standard ist insbesondere in den ETSI-Dokumenten GSM04.07 (ETS 300 556), GSM04.11 und GSM03.40 definiert. In Kompatibilität hierzu kann der Data-Link-Layer in Anpassung an die konkreten Anforderungen frei definiert werden.

Gemäß einer vorteilhaften Ausprägung der Erfindung sind die neu definierte physikalische Schicht und Datenverbindungs-Schicht mit den bestehenden Schichten (Layern) des GSM-SMS-Protokollsatzes kombiniert. Hierbei handelt es sich um die Short-Message-Transferschicht (Short Message Transfer Layer = SM-TL) gemäß ETSI-Dokument GSM03.40 und die Verbindungsmanagement-Schicht (Connection Management Layer = CM) nach GSM04.11.

Außerdem ist es möglich, dass die Kombination der neu definierten physikalischen Schicht und Datenverbindungs-Schicht mit den bestehenden Schichten des GSM-SMS-Protokollsatzes die Short-Message-Relaisschicht (Short Message Relay Layer = SM-RL) nach GSM03.40 und 04.11 umfasst.

In der Verbindungsmanagement-Schicht CM ist speziell eine zusätzliche Nachricht zur Signalisierung des Verbindungszustandes (CP-Connect) definiert, deren Format nach GSM04.07/Kapitel 11 bestimmt ist. Eine spezielle Festlegung gibt es auch hinsichtlich des Formates einer Nachricht in der Data Link Layer DL. Hierauf wird weiter unten genauer eingegangen.

In einer bevorzugten Anwendung der Erfindung ist, wie weiter oben bereits angedeutet, eines der Telekommunikations-Endgeräte an ein, z.B. nach dem GSM- oder auch dem künftigen UMTS-Standard betriebenes, Mobilfunknetz angeschlossen, wobei die Verbindung zwischen beiden Netzen in üblicher Weise durch eine Gateway-Mobilvermittlungsstelle hergestellt wird.

Eine weitere vorteilhafte Anwendung der Erfindung ergibt sich, wenn mindestens eines der Telekommunikations-Endgeräte ein Schnurlostelefon ist, von dem bzw. zu dem die Kurznachricht über eine, z.B. nach dem DECT-Standard betriebene, Feststation oder Nebenstellenanlage in das bzw. aus dem Festnetz übertragen wird. Moderne Schnurlostelefone verfügen über die wichtigsten hardwaremäßigen Voraussetzungen zur Implementierung des vorgeschlagenen Dienstes; insbesondere sind sie in der Regel mit einer geeigneten Anzeigeeinheit und Mitteln zur DTMF-Signalisierung ausgerüstet und zur Erkennung der oben erwähnten FSK-Off-Hook-Signalisierung im Sprachband ausgebildet.

Vorteile und Zweckmäßigkeiten der Erfindung ergeben sich im Übrigen aus der nachfolgenden genaueren Beschreibung anhand der Figuren. Von diesen zeigen:
Fig. 1 eine Prinzipskizze eines Telekommunikationssystems gemäß der Erfindung,
Fig. 2 eine Darstellung des Schichtenmodells (SI-Modells) der Konfiguration nach Fig. 1,
Fig. 3 ein Flussdiagramm für einen vom Telekommunikations-Endgerät initiierten Verbindungsaufbau gemäß einer Ausführung der Erfindung,
Fig. 4 ein Flussdiagramm für einen vom Short-Message-Dienstzentrum initiierten Verbindungsaufbau gemäß einer Ausführung der Erfindung,
Fig. 5 eine Darstellung des Aufbaus einer Nachricht zum Start der Prozedur auf der Verbindungsmanagement-Schicht und
Fig. 6 eine Darstellung des Nachrichtenformates auf der Datenverbindungs-Schicht.

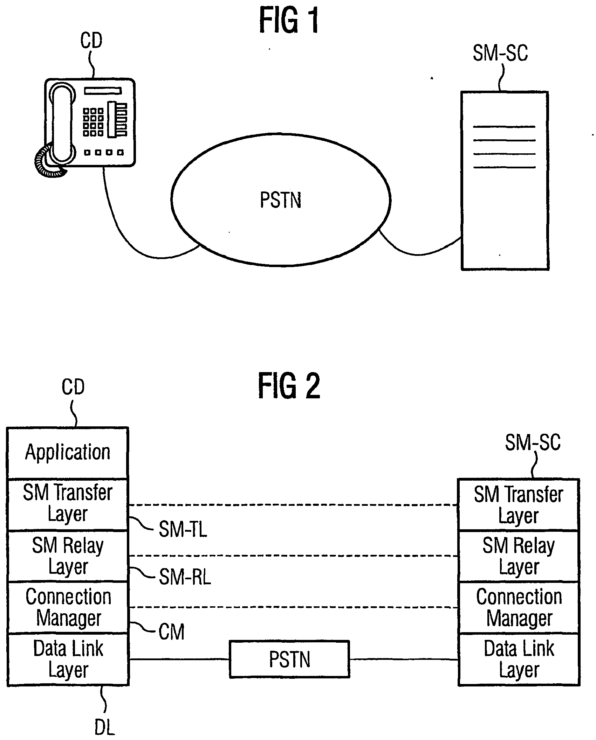

Fig. 1 zeigt schematisch die grundlegenden Komponenten eines erfindungsgemäßen Telekommunikationssystems, nämlich ein öffentliches leitungsgebundenes Fernsprechnetz (Festnetz) PSTN, ein an dieses angeschlossenes Telekommunikations-Endgerät CD und ein ebenfalls an das Festnetz angeschlossenes Short-Message-Dienstzentrum SM SC. Auf das Zusammenspiel dieser Komponenten beziehen sich die nachfolgenden Ausführungen zur Erläuterung der Erfindung.

Fig. 2 zeigt das zugehörige SI-Schichtenmodell, oberhalb der (hier nicht dargestellten) physikalischen Schicht. Die Schichtstruktur umfasst zunächst eine - weiter unten genauer spezifizierte - Datenverbindungs-Schicht DL (Data Link Layer) und weiterhin die an sich aus dem GSM-SMS-Standard bekannten Schichten Verbindungsmanager CM (Connection Manager), Short-Message-Relaisschicht SM-RL (SM Relay Layer) und Short-Message-Transferschicht SM-TL (SM Transfer Layer) sowie - auf Seiten des Endgerätes - Applikation (Application).

Die Protokollbeschreibungen der Schichten SM-TL, SM-RL und CM sind den ETSI-Dokumenten GSM03.40 [1] und GSM04.11 [3] zu entnehmen; siehe dazu das anliegende Normen-/Dokumentenverzeichnis.

Die Grundvoraussetzung zur Übertragung von Kurznachrichten (Short Messages) über das Festnetz PSTN ist eine Durchschaltvermittlung zwischen den beteiligten Einheiten (Telekommunikations-Endgeräte und Short-Message-Dienstzentrum). Es ist dann unerheblich, ob die Einheiten über ISDN oder eine analoge Schnittstelle angeschlossen sind.

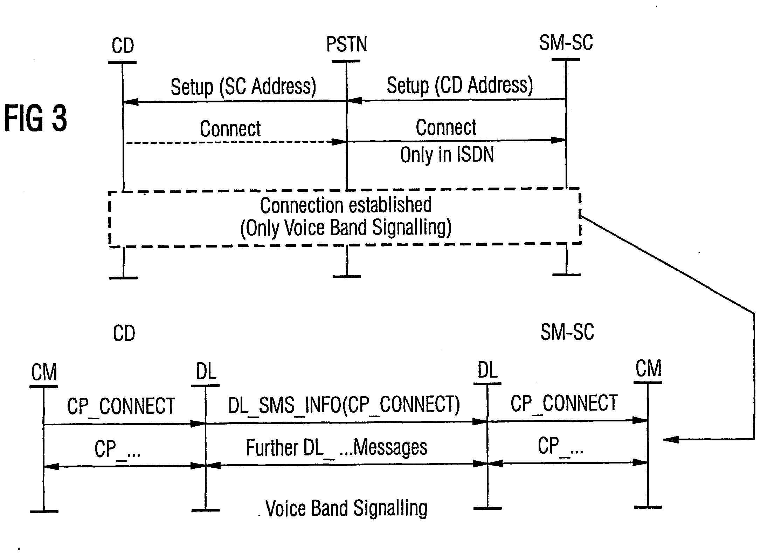

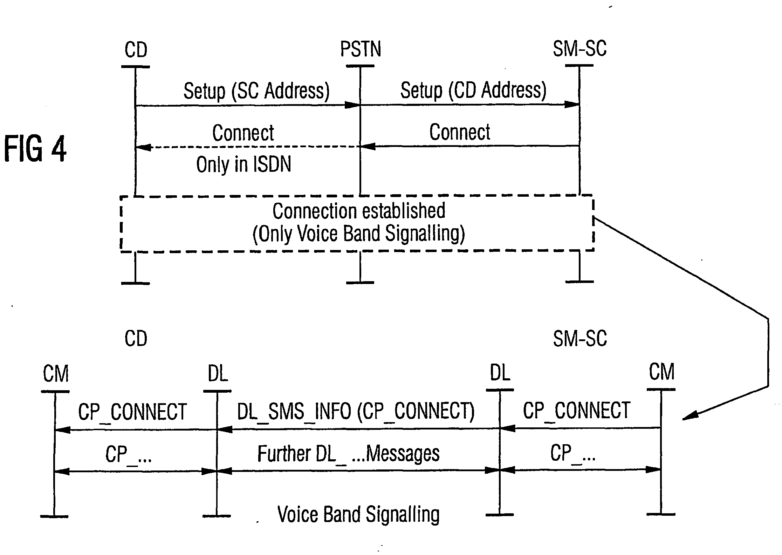

In den Figuren 3 und 4 ist schematisch der Aufbau einer Verbindung ausgehend von einem Telekommunikations-Endgerät (Fig. 3) bzw. ausgehend von dem Short-Message-Dienstzentrum (Fig. 4) dargestellt. Diese Diagramme sind für den Fachmann selbst erklärend und bedürfen daher hier keiner weiteren Erläuterung.

Im Falle eines ISDN-Netzes sind die Nachrichten (Messages) funktioneller Art und werden im ISDN-D-Kanal übertragen. Bei einem analogen Netz handelt es sich um Rufimpulse und Belegt-Signale. Nach Aufbau der Verbindung werden sämtliche Informationen zwischen den Einheiten per FSK-Signalisierung im Sprachband übertragen, speziell in Übereinstimmung mit den ETSI-Spezifikationen ETS 300 659-1 [4] und ETS 300 659-2 [5].

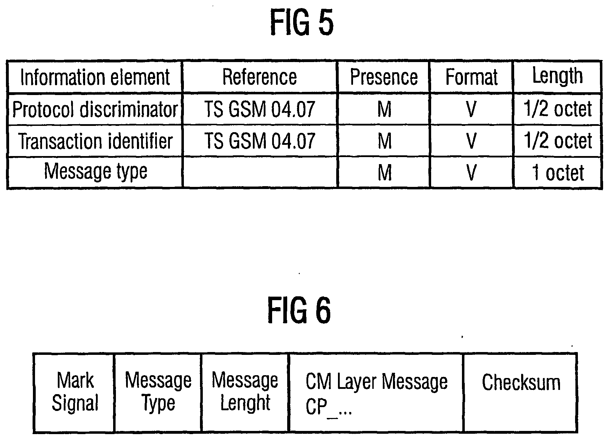

In Fig. 5 ist der Aufbau einer zusätzlichen Nachricht CP CONNECT gezeigt, die zur Benachrichtigung der rufenden Einheit seitens der angerufenen Einheit über den Aufbau der Verbindung dient. Diese Benachrichtigung ist erforderlich, um die Abläufe in der CM-Schicht in Gang zu setzen. Die Nachrichtenartkodierung ist: 0x40 0100 0000B, und das Format folgt GSM04.7/Kapitel 11 [2].

Die Schicht DL ermöglicht dem Verbindungsmanager (Schicht CM) die Absendung und den Empfang von Nachrichten mit der Partner-Einheit, sie stellt die Bitfehlererfassung bereit und realisiert für eine Nachricht in der Schicht CM ein Ankündigungssignal (Mark Signal).

In Fig. 6 ist das Format einer Nachricht in der Datenverbindungs-Schicht dargestellt. Das Feld "Mark Signal" besteht aus einem Block von 80 ± 25 Bit. Das Feld "Message Type" umfasst ein Oktett und enthält ein binär kodierte Identifizierungs-Kennzahl für die Nachricht. Die Kodierung für einen DL_SMS_INFO Message Type ist: 011H 0001 0001B. Die Kodierung für einen DL_SMS_ERROR Message Type ist: 012H 0001 0010 B.

Das Feld "Message Length" umfasst ein Oktett und enthält die binär kodierte Anzahl von Oktetts der Nachricht (unter Ausnahme der Oktetts des Message Type, der Message Length und der Checksum). Insgesamt ist eine Nachrichtenlänge bis zu 255 Oktetts erlaubt. Das Feld "Checksum" umfasst ein Oktett und enthält die beiden Komplemente der Summe aller Oktetts in der Nachricht, beginnend vom "Message Type"-Oktett bis zum Ende, modulo 256.

Im Falle eines Prüfsummen-Fehlers sendet die Datenverbindungs-Schicht der empfangenden Einheit eine Nachricht des Typs "DL_SMS_ERROR" an die (ursprünglich) sendende Einheit. In dieser Nachricht ist das Datenfeld leer und die Nachrichtenlänge (Message Length) auf Null gesetzt. Die Datenverbindungs-Schicht der sendenden Einheit hat daraufhin die letzte gesendete Nachricht zu wiederholen.

Zur physikalischen Schicht ist noch anzumerken, dass im Falle einer FSK-Signalisierung eine Halbduplex-1200-Baud-Modulation eingesetzt werden kann. Im Falle einer DTMF-Signalisierung wird jedes Oktett einer Nachricht in der Datenverbindungs-Schicht in das höhere (obere) und niedere (untere) Halbbyte aufgeteilt. Jedes Halbbyte wird mit einem DTMF-Bit kodiert. Zuerst wird das obere Halbbyte gesendet und dann das untere. Im Falle der DTMF-Signalisierung wird das Ankündigungssignal der DL-Nachricht weggelassen.

Hinsichtlich der Signalisierungsmethode bestehen diverse Kombinationsmöglichkeiten; im Normalfall wird im Telekommunikations-Endgerät eine Auswahl fest installiert, die dann vom Nutzer nicht mehr zu verändern ist.

## Patentansprüche

1. Verfahren zur Übermittlung einer Nachricht zwischen einem ersten Telekommunikations-Endgerät und einem zweiten Telekommunikations-Endgerät (CD), von denen mindestens das zweite Telekommunikations-Endgerät (CD) an ein leitungsgebundenes Telefonnetz (PSTN) angeschlossen ist, wobei
- die Nachricht als Kurznachricht, insbesondere über eine Eingabetastatur oder einen Touch-Screen, an dem zweiten Telekommunikations-Endgerät (CD) eingegeben und in ein Short-Message-Format gebracht wird, oder
die Nachricht von dem ersten Telekommunikations-Endgerät an ein Short-Message-Dienstzentrum (SMSC) als in ein Short-Message-Format gebrachte Kurznachricht zur Weiterleitung an das zweite Telekommunikations-Endgerät (CD) gesendet wird,
- über eine physikalische Schicht und eine Datenverbindungs-Schicht (DL) ein Verbindungsaufbau zwischen dem zweiten Telekommunikations-Endgerät (CD) und dem Short-Message-Dienstzentrum (SMSC) realisiert wird,
- die Kurznachricht im Short-Message-Format über eine FSK-Off-Hook-Signalisierung im Sprachband entweder von dem zweiten Telekommunikations-Endgerät (CD) an das Short-Message-Dienstzentrum (SMSC) oder von dem Short-Message-Dienstzentrum (SMSC) an das zweite Telekommunikations-Endgerät (CD) übertragen wird und
- die in dem Short-Message-Dienstzentrum (SMSC) von dem zweiten Telekommunikations-Endgerät (CD) empfangene Kurznachricht an das erste Telekommunikations-Endgerät weitergeleitet oder die in dem zweiten Telekommunikations-Endgerät (CD) empfangene Kurznachricht in ein Ausgabeformat umgesetzt und, insbesondere auf einer Anzeigeeinheit, ausgegeben wird.

2. Telekommunikationssystem zur Übermittlung einer Nachricht zwischen einem ersten Telekommunikations-Endgerät und einem zweiten Telekommunikations-Endgerät (CD), mit
- einem leitungsgebundenen Telefonnetz (PSTN),
- einem Short-Message-Dienstzentrum (SMSC),
- dem ersten Telekommunikations-Endgerät und dem zweiten Telekommunikations-Endgerät (CD), von denen mindestens das zweite Telekommunikations-Endgerät (CD) an das leitungsgebundene Telefonnetz (PSTN) angeschlossen ist,
**dadurch gekennzeichnet, dass**
das erste Telekommunikations-Endgerät, das zweite Telekommunikations-Endgerät (CD) und das Short-Message-Dienstzentrum (SMSC) derart ausgebildet sowie das erste Telekommunikations-Endgerät und das zweite Telekommunikations-Endgerät (CD) dem Short-Message-Dienstzentrum (SMSC) derart zugeordnet sind, dass
- die Nachricht als Kurznachricht, insbesondere über eine Eingabetastatur oder einen Touch-Screen, an dem zweiten Telekommunikations-Endgerät (CD) eingegeben und in ein Short-Message-Format gebracht wird, oder
die Nachricht von dem ersten Telekommunikations-Endgerät an das Short-Message-Dienstzentrum (SMSC) als in ein Short-Message-Format gebrachte Kurznachricht zur Weiterleitung an das zweite Telekommunikations-Endgerät (CD) gesendet wird,
- über eine physikalische Schicht und eine Datenverbindungs-Schicht (DL) ein Verbindungsaufbau realisiert wird,
- die Kurznachricht im Short-Message-Format über eine FSK-Off-Hook-Signalisierung im Sprachband entweder von dem zweiten Telekommunikations-Endgerät (CD) an das Short-Message-Dienstzentrum (SMSC) oder von dem Short-Message-Dienstzentrum (SMSC) an das zweite Telekommunikations-Endgerät (CD) übertragen wird und
- die in dem Short-Message-Dienstzentrum (SMSC) von dem zweiten Telekommunikations-Endgerät (CD) empfangene Kurznachricht an das erste Telekommunikations-Endgerät weitergeleitet oder die in dem zweiten Telekommunikations-Endgerät (CD) empfangene Kurznachricht in ein Ausgabeformat umgesetzt und, insbesondere auf einer Anzeigeeinheit, ausgegeben wird.

3. Telekommunikationssystem nach Anspruch 2,
**dadurch gekennzeichnet, dass**
eines der Telekommunikations-Endgeräte an ein Mobilfunknetz angeschlossen ist, wobei das leitungsgebundene Netz (PSTN) mit dem Mobilfunknetz über eine Gateway-Mobilvermittlungsstelle verbunden ist.

4. Telekommunikationssystem nach Anspruch 2 oder 3,
**dadurch gekennzeichnet, dass**
das zweite Telekommunikations-Endgerät (CD) ein Schnurlostelefon ist, welches über eine Feststation oder Nebenstellenanlage an das leitungsgebundene Telefonnetz angeschlossen ist.

5. Telekommunikationssystem nach einem der Ansprüche 2 bis 4,
**gekennzeichnet durch**
ein Übertragungsprotokoll, in dem neben einer Datenverbindungs-Schicht (DL) und einer physikalischen Schicht eine Short-Message-Transferschicht (SM-TL) gemäß ETSI-Dokument GSM03.40 und eine Verbindungsmanagement-Schicht (CM) nach GSM04.11 definiert sind.

6. Telekommunikationssystem nach Anspruch 5,
**dadurch gekennzeichnet, dass**
in dem Übertragungsprotokoll eine Short-Message-Relaisschicht (SM-RL) nach GSM03.40 und 04.11 definiert ist.

7. Telekommunikationssystem nach Anspruch 5,
**dadurch gekennzeichnet**, dassin der Verbindungsmanagement-Schicht (CM) eine zusätzliche Nachricht zur spezifischen Signalisierung des Verbindungszustandes an die rufende Einheit im Format nach GSM04.07/Kapitel 11 definiert ist.

8. Telekommunikationssystem nach einem der Ansprüche 2 bis 7,
**dadurch gekennzeichnet, dass**
das Format einer Nachricht in der Datenverbindungs-Schicht (DL) aus
- einem Feld "Mark-Signal",
- einem Feld "Message-Type",
- einem Feld "Message-Length",
- einem Feld "CM Layer Message CP_...",
- einem Feld "Checksum",
besteht, wobei die Felder in dem Format in der genannten Reihenfolge angeordnet sind.

9. Telekommunikationssystem nach einem der Ansprüche 2 bis 8,
**dadurch gekennzeichnet, dass**
das Short-Message-Dienstzentrum (SMSC) zur Übermittlung von Kurznachrichten im Short-Message-Format dem leitungsgebundenen Telefonnetz (PSTN) zugeordnet ist.

## Claims

1. Method for transmission of a message between a first telecommunication terminal and a second telecommunication terminal (CD), of which at least the second telecommunication terminal (CD) is connected to a line-connected telephone network (PSTN), wherein
- the message is input as a short message, in particular via an input keypad or a touchscreen, on the second telecommunication terminal (CD) and is converted into a short message format, or
the message is sent from the first telecommunication terminal to a short message service center (SMSC) as a short message converted into a short message format for the purpose of forwarding to the second telecommunication terminal (CD),
- a connection setup is realized between the second telecommunication terminal (CD) and the short message service center (SMSC) via a physical layer and a data link layer (DL),
- the short message is transmitted in the short message format via FSK off-hook signaling in the voice band either from the second telecommunication terminal (CD) to the short message service center (SMSC) or from the short message service center (SMSC) to the second telecommunication terminal (CD), and
- the short message received from the second telecommunication terminal (CD) in the short message service center (SMSC) is forwarded to the first telecommunication terminal or
the short message received in the second telecommunication terminal (CD) is converted into an output format and is output, in particular on a display unit.

2. Telecommunication system for transmission of a message between a first telecommunication terminal and a second telecommunication terminal (CD), having
- a line-connected telephone network (PSTN),
- a short message service center (SMSC),
- the first telecommunication terminal and the second telecommunication terminal (CD), of which at least the second telecommunication terminal (CD) is connected to the line-connected telephone network (PSTN),
**characterized in that**
the first telecommunication terminal, the second telecommunication terminal (CD) and the short message service center (SMSC) are designed, and the first telecommunication terminal and the second telecommunication terminal (CD) are assigned to the short message service center (SMSC), such that
- the message is input as a short message, in particular via an input keypad or a touchscreen, on the second telecommunication terminal (CD) and is converted into a short message format, or
the message is sent from the first telecommunication terminal to the short message service center (SMSC) as a short message converted into a short message format for the purpose of forwarding to the second telecommunication terminal (CD),
- a connection setup is realized via a physical layer and a data link layer (DL),
- the short message is transmitted in the short message format via FSK off-hook signaling in the voice band either from the second telecommunication terminal (CD) to the short message service center (SMSC) or from the short message service center (SMSC) to the second telecommunication terminal (CD), and
- the short message received from the second telecommunication terminal (CD) in the short message service center (SMSC) is forwarded to the first telecommunication terminal or
the short message received in the second telecommunication terminal (CD) is converted into an output format and is output, in particular on a display unit.

3. Telecommunication system according to Claim 2,
**characterized in that**
one of the telecommunication terminals is connected to a mobile radio network, the line-connected network (PSTN) being connected to the mobile radio network via a gateway mobile switching center.

4. Telecommunication system according to Claim 2 or 3,
**characterized in that**
the second telecommunication terminal (CD) is a cordless telephone which is connected to the line-connected telephone network via a fixed station or private branch exchange.

5. Telecommunication system according to one of Claims 2 to 4,
**characterized by**
a transmission protocol in which a short message transfer layer (SM-TL) in accordance with ETSI document GSM03.40 and a connection management layer (CM) according to GSM04.11 are defined in addition to a data link layer (DL) and a physical layer.

6. Telecommunication system according to Claim 5,
**characterized in that**
a short message relay layer (SM-RL) according to GSM03.40 and 04.11 is defined in the transmission protocol.

7. Telecommunication system according to Claim 5,
**characterized in that** an additional message for the specific signaling of the connection state to the calling unit in the format according to GSM04.07/chapter 11 is defined in the connection management layer (CM).

8. Telecommunication system according to one of Claims 2 to 7,
**characterized in that**
the format of a message in the data link layer (DL) comprises
- a field "mark signal",
- a field "message type",
- a field "message length",
- a field "CM layer message CP_...",
- a field "checksum",
the fields in the format being arranged in the order mentioned.

9. Telecommunication system according to one of Claims 2 to 8,
**characterized in that**
the short message service center (SMSC) serving for the transmission of short messages in the short message format is assigned to the line-connected telephone network (PSTN).

## Revendications

1. Procédé de transmission d'un message entre un premier terminal de télécommunication et un deuxième terminal de télécommunication (CD), au moins le deuxième terminal de télécommunication (CD) étant raccordé à un réseau téléphonique filaire (PSTN),
- le message étant introduit en tant que message court, en particulier via un clavier d'entrée ou un écran tactile, au niveau du deuxième terminal de télécommunication (CD) et étant converti dans un format de message court ou bien le message étant envoyé par le premier terminal de télécommunication à un centre de services de message court (SMSC) en tant que message court converti dans un format de message court pour retransmission au deuxième terminal de télécommunication (CD),
- un établissement de liaison entre le deuxième terminal de télécommunication (CD) et le centre de services de message court (SMSC) étant réalisé via une couche physique et une couche de liaison de données (DL),
- le message court étant transmis au format de message court via une signalisation FSK Off Hook dans la bande vocale soit du deuxième terminal de télécommunication (CD) au centre de services de message court (SMSC) soit du centre de services de message court (SMSC) au deuxième terminal de télécommunication (CD) et
- le message court reçu du deuxième terminal de télécommunication (CD) dans le centre de services de message court (SMSC) étant retransmis au premier terminal de télécommunication ou le message court reçu dans le deuxième terminal de télécommunication (CD) étant converti dans un format de sortie et produit en sortie, en particulier au niveau d'une unité d'affichage.

2. Système de télécommunication pour transmettre un message entre un premier terminal de télécommunication et un deuxième terminal de télécommunication (CD), comportant :
- un réseau téléphonique filaire (PSTN),
- un centre de services de message court (SMSC),
- le premier terminal de télécommunication et le deuxième terminal de télécommunication (CD), au moins le deuxième terminal de télécommunication (CD) étant raccordé au réseau téléphonique filaire (PSTN),
**caractérisé en ce que**
le premier terminal de télécommunication, le deuxième terminal de télécommunication (CD) et le centre de services de message court (SMSC) sont réalisés de telle sorte que le premier terminal de télécommunication et le deuxième terminal de télécommunication (CD) sont associés au centre de services de message court (SMSC) de telle sorte que
- le message est introduit en tant que message court, en particulier via un clavier d'entrée ou un écran tactile, au niveau du deuxième terminal de télécommunication (CD) et est converti dans un format de message court ou bien le message est envoyé par le premier terminal de télécommunication à un centre de services de message court (SMSC) en tant que message court converti dans un format de message court pour retransmission au deuxième terminal de télécommunication (CD),
- un établissement de liaison est réalisé via une couche physique et une couche de liaison de données (DL),
- le message court est transmis au format de message court via une signalisation FSK Off Hook dans la bande vocale soit du deuxième terminal de télécommunication (CD) au centre de services de message court (SMSC) soit du centre de services de message court (SMSC) au deuxième terminal de télécommunication (CD) et
- le message court reçu du deuxième terminal de télécommunication (CD) dans le centre de services de message court (SMSC) est retransmis au premier terminal de télécommunication ou le message court reçu dans le deuxième terminal de télécommunication (CD) est converti dans un format de sortie et produit en sortie, en particulier au niveau d'une unité d'affichage.

3. Système de télécommunication selon la revendication 2, **caractérisé en ce que** l'un des terminaux de télécommunication est raccordé à un réseau radio mobile, le réseau filaire (PSTN) étant relié au réseau radio mobile via un centre de commutation mobile de passerelle.

4. Système de télécommunication selon la revendication 2 ou 3, **caractérisé en ce que** le deuxième terminal de télécommunication (CD) est un téléphone sans fil qui est raccordé au réseau téléphonique filaire via une station fixe ou un autocommutateur téléphonique privé.

5. Système de télécommunication selon l'une des revendications 2 à 4, **caractérisé par** un protocole de transmission dans lequel sont définies outre une couche de liaison de données (DL) et une couche physique, une couche de transfert de message court (SM-TL) selon le document GSM03.40 de l'ETSI et une couche de gestion de liaison (CM) selon GSM04.11.

6. Système de télécommunication selon la revendication 5, **caractérisé en ce qu'**est définie, dans le protocole de transmission, une couche de relais de message court (SM-RL) selon GSM03.40 et 04.11.

7. Système de télécommunication selon la revendication 5, **caractérisé en ce qu'**est défini, dans la couche de gestion de liaison (CM), un message supplémentaire pour la signalisation spécifique de l'état de liaison à l'unité appelante au format selon GSM04.07/chapitre 11.

8. Système de télécommunication selon l'une des revendications 2 à 7, **caractérisé en ce que** le format d'un message, dans la couche de liaison de données (DL), se compose
- d'un champ « Mark-Signal »
- d'un champ « Message-Type »,
- d'un champ « Message-Length »,
- d'un champ « CM Layer Message CP ... »,
- d'un champ « Checksum »,
les champs étant agencés dans le format dans l'ordre indiqué.

9. Système de télécommunication selon l'une des revendications 2 à 8, **caractérisé en ce que** le centre de services de message court (SMSC) est, pour la transmission de messages courts au format de message court, associé au réseau téléphonique filaire (PSTN).
